# EUROPEAN PATENT APPLICATION

(11) **EP 2 309 061 A2**
(43) Date of publication of application: **13.04.2011**
(21) Application number: 10187071.5
(22) Date of filing: 08.10.2010
(51) Int. Cl.: E02B 3/26

(54) **Pier or dock fender**

(30) Priority: 09.10.2009 IT PD20090053 U
(71) Applicant: V.M. S.p.a., 41049 Sassuolo (MO) (IT)
(72) Inventor: Vincenzi, Luca, I-42013, Casalgrande (RE) (IT); Fabbri, Massimiliano, I-42014, Castellarano (RE) (IT)
(74) Representative: Gallo, Luca

(57) **Abstract**

The invention is a fender for docks or piers provided with a walking surface (11) arranged just above the surface of the water and with a vertical wall (4, 12) in contact with the water and forming an edge (5) with the walking surface (11), said fender (1) comprising a supporting structure (6) and an elastically yielding bumper body (9).

The supporting structure (6), intended to be fixed to the dock (2) through first fixing means (10), is constituted by an L-shaped plate intended to be installed so as to cover the edge (5) of the dock (2) and provided with a bent portion (20) delimiting a first portion (7) arranged so as to cover the vertical wall (4), and a second portion (13) arranged so as to cover the walking surface (11). The bumper body (9) is fixed to and projects from the supporting structure (6) so as to cover it at least partially and substantially until reaching at least the bent portion (20), and is suited to absorb the impact of the hull of crafts hitting the fender (1).

## Description

### Field of application of the invention

The present invention concerns a fender for docks or piers, according to the preamble of independent claim 1.

The fender that is the subject of the invention is suited to be used in harbours and marinas to cover docks and thus protect craft from possible impacts during mooring or berthing manoeuvres. The fender for docks that is the subject of the present invention therefore belongs to the field of nautical accessories production.

### State of the art

As is known, during the mooring manoeuvres inside harbours or marinas craft often happen to accidentally hit surrounding obstacles, like for example the dock, the pier, the anchor logs, the poles delimiting the berth or other craft already moored. Even if during these manoeuvres craft move at very low speed, any impact may damage their hull, even severely.

Analogously, it may happen that a craft that has already been moored and is at rest inside a harbour or a marina hits the dock or the pier to which it is moored because of the continuous movement of the water, which in turn may be due, for example, to other craft passing nearby, the wind, tide or surf.

In the nautical sector, therefore, several protection devices for craft hulls have been introduced in the market.

Said protection devices are generally designed to be arranged on the sides of craft (fenders) or to cover poles driven into the sea bottom, or to be applied to the docks or piers of harbours and marinas so as to project therefrom. All the above mentioned protection devices serve the common function of protecting the hulls of craft from possible impacts, avoiding scratches, paint removal and in general any damage that may affect the soundness of the hulls.

As is known, fenders have been available on the market for some time now that are suited to be installed, spaced from each other, along the sides of a craft during the mooring manoeuvres or while it is at rest in the harbour. It is known that fenders consist of elastically deformable bodies available in various shapes, generally cylindrical, inflatable or padded.

During the mooring manoeuvres they ensure proper protection to the craft from contact with other craft already moored, but they do not ensure particularly effective protection from impacts against the dock or pier, especially when the craft is at rest. Said fenders, in fact, do not provide continuous protection along the entire hull of the craft and therefore when the sea level varies due to the tide or to the presence of waves produced by other craft or to the weather conditions the hull may hit against unprotected edges of the dock or pier.

In order to overcome this drawback, fenders have been designed that are suited to be applied directly to docks and piers against which craft may impact.

Patent WO-A-2004/094893 discloses a fender that was specially designed to be applied to docks.

Said fender comprises a supporting structure that is elongated in shape and suited to be fixed, preferably by means of screws, to the vertical wall of the dock, just above the water surface, and a bumper body that is fixed to the supporting structure or obtained in a single piece with the supporting structure. Said bumper body is made of a plastic material, for example polyethylene with very high molecular weight, and extends from the supporting structure with a shape that is suited to deform elastically in case the hull of a craft hits it.

This fender of known type is complex to construct and expensive to make and to install, being made up of several parts that must be assembled and mounted on the vertical wall of the dock by more than one operator.

Another fender suited to be applied to docks is available on the market, and is generally cylindrical in shape, made of a foam or inflatable polymeric material, and fixed to the dock by means of ropes or chains, so that it rests on the vertical wall of the dock itself, just above the water surface.

This fender poses the drawback that it ensures only limited protection for craft hulls, especially because it does not protect them from the upper edge of the dock, that is, the edge formed by the vertical wall and the dock walking surface. Therefore, in the case of a sea storm it may happen that the craft, moved by the sea and the wind, reaches beyond the fender with the projecting part of its hull and hits the upper edge of the dock, thus getting damaged. Furthermore, docks are generally made of reinforced concrete, a material that is rather rough and over time, due to the marine environment, deteriorates and presents many asperities on its surface, in particular at the level of the edges. It is therefore sufficient for the hull of a craft to graze even not too violently against the upper edge of the dock to get easily damaged by the asperities of the concrete surface.

### Description of the invention

In this situation, the object of the present invention is therefore to overcome the drawbacks posed by the fenders of known type by providing a fender for docks that is capable of ensuring a high degree of protection for craft hulls.

A further object of the present invention is to provide a fender for docks that is not too bulky and can therefore be used in tourist harbours and small marinas.

A further object of the present invention is to provide a fender for docks that is simple to carry out and to install, and completely reliable from an operational point of view.

A further object of the present invention is to provide a fender for docks that is capable of ensuring sufficient protection for craft hulls in case of impacts against the vertical walls of docks or pier poles and also in case of impacts against the upper edges of docks or piers. Another object of the present invention is to provide a fender for docks that ensures optimal protection for the hulls of crafts even in case of particularly violent impacts.

Another object of the present invention is to provide a fender for docks that has low production and maintenance costs and can be made using economic materials.

These and other objects are all achieved by the fender for docks or piers that is the subject of the present invention.

### Brief description of the drawings

The technical details of the invention, in accordance with the obj ects described above, can be clearly found in the claims below, while the advantages offered by the invention will be more evident in the following detailed description that makes reference to the attached drawings illustrating a non-limiting example of embodiment, wherein:
**Figure 1** shows a perspective top view of a fender for docks according to a first possible embodiment of the invention;
**Figure 2** shows a perspective top view of a fender for docks according to a second possible embodiment of the invention;
**Figure 3** shows a schematic perspective view of a portion of a dock on which the fenders for docks or piers of Figures 1 and 2 are installed;
**Figure 4** shows a schematic perspective view of a portion of a dock on which the fenders for docks or piers of Figures 1 and 2 are installed;
**Figure 5** shows a side section view of a fender according to the present invention, installed on a pier;
**Figure 6** shows a schematic perspective view of a portion of a pier on which a different example of fender according to the present invention is installed;
**Figure 7** shows a side section view of the fender of Figure 6 installed on a pier.

### Detailed description of a preferred embodiment of the invention

With reference to drawings attached hereto, the fender for docks that is the subject of the present invention is indicated as a whole by 1.

The fender 1 is intended to be used on docks 2 of the type provided with a walking surface 11 arranged above the water surface and with one or more vertical walls 4 in contact with the water and each forming an edge 5 where they meet the walking surface 11. In particular, the fender 1 is intended to cover part of the vertical wall 4 of a dock 2 that projects out of the water.

Analogously, always falling within the scope of protection of this patent, the same fender 1 can be used on piers or piers 3, of the type provided with walking surface 11 suspended above the water surface, for example by means of a plurality of poles driven into the sea bottom, and with vertical walls 12. The vertical walls 12 can consist only of the sides of the walking surface 11 or even of the supporting poles of the pier or landing structure 3. Analogously to the docks 2, each of said vertical walls 12 of the pier or landing structure 3 forms an edge 5 with the walking surface 11. In particular, the fender 1 is intended to cover part of the vertical wall 4 of the pier and part of the horizontal surface of the walking surface 11.

The fender 1 that is the subject of the present invention has been mainly designed for use in the nautical sector, in marinas and harbours, to be applied to docks 2 generally made of concrete and to piers 3 generally made of metal or wood, in order to protect craft even when their hull, for example in case of sea storms, reaches or gets above the edge 5 of the dock 2 (or of the pier 3).

With particular reference to the enclosed drawings, the fender 1 comprises a supporting structure 6 and an elastically yielding bumper body 9.

The supporting structure 6 is intended to be fixed, through first fixing means 10, to the dock 2 or the pier 3, with a first surface 21 in direct contact with the dock 2 or the pier 3 and a second surface 22 that remains at least partially exposed. The bumper body 9 is fixed to and at the same time projects from the supporting structure 6, in particular at least the second exposed surface of the supporting structure 6, and is suited to absorb the impact of the craft hulls that hit the fender 1.

According to the idea that forms the basis of the present invention, the supporting structure 6 comprises at least one L-shaped plate intended to be mounted so as to cover the edge 5 of the dock 2 or the pier 3. In particular, the plate has a bent portion 20, substantially at 90°, which delimits a first portion 7 and a second portion 13 of the supporting structure itself.

The first portion 7 is arranged so as to cover the vertical wall 4 of the dock 2 and the second portion 13 is arranged so as to cover the walking surface 11. If the fender is used on a pier 3, the second portion 13 is still arranged so as to cover the walking surface 11, while the first portion 7 extends downwards starting from the vertical wall 12 of the pier 3, substantially in a direction orthogonal to the walking surface 11.

Advantageously, the second portion 13 extends over the walking surface 11 starting from the edge 5 of the dock 2 or the pier 3 for at least 10 cm and preferably 15 cm.

The supporting structure 6, being L-shaped, covers the upper edge 5 of the dock 2 or the pier 3, so that, as explained below, the fender 1 protects the hulls of the craft that may hit the edge 5 or reach beyond it, preventing any damage that may result if they graze directly against the concrete of which the dock 2 is made or against the metal frame that usually holds the wooden boards of the pier 3.

The bumper body 9 is fixed to the first portion 7 so as to cover it at least partially and substantially extends until reaching the bent portion 20.

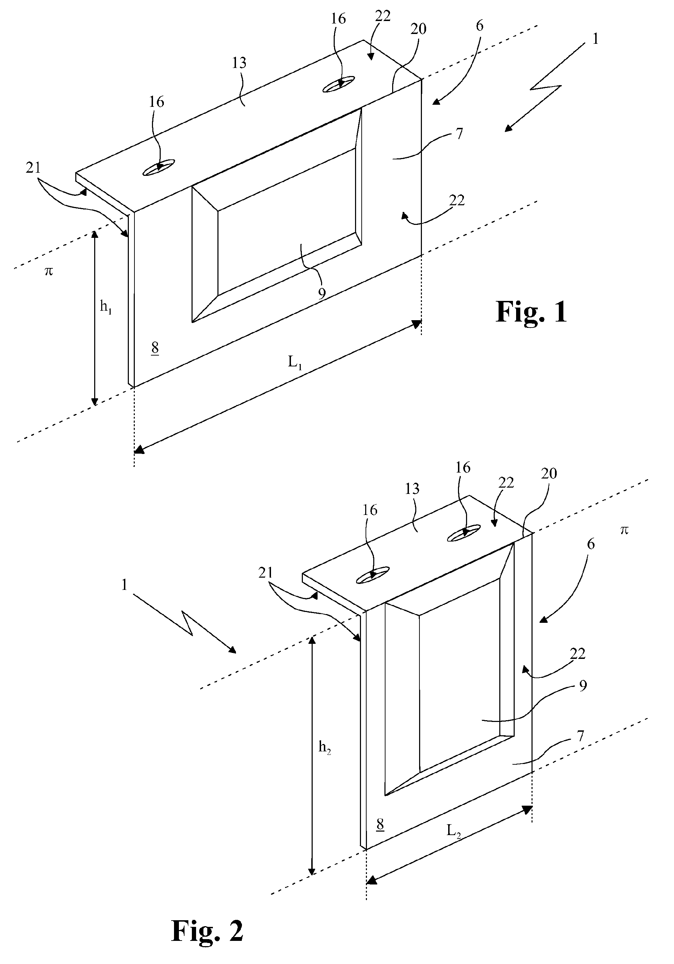

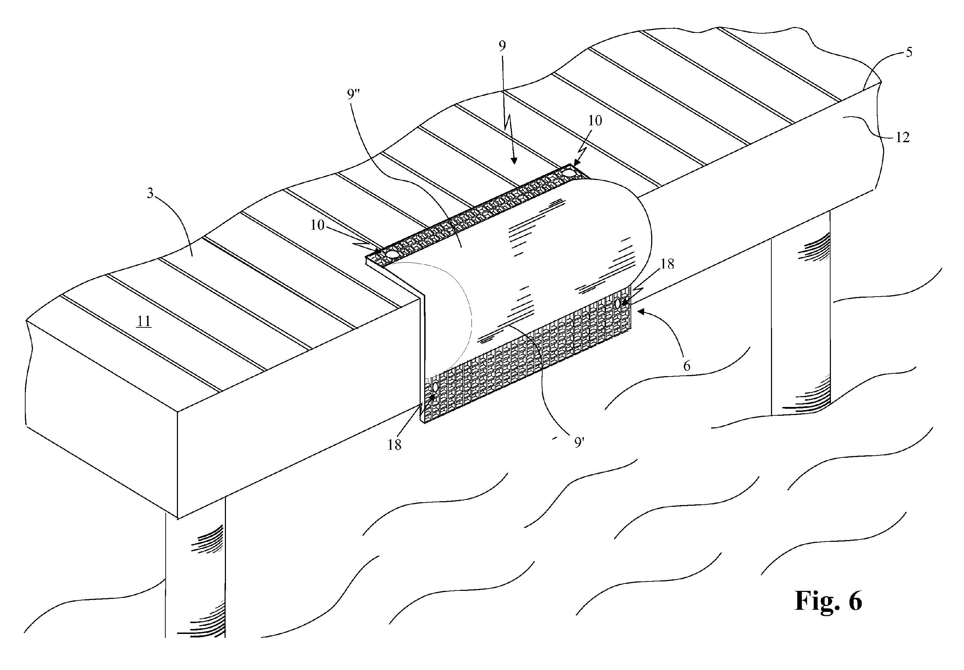

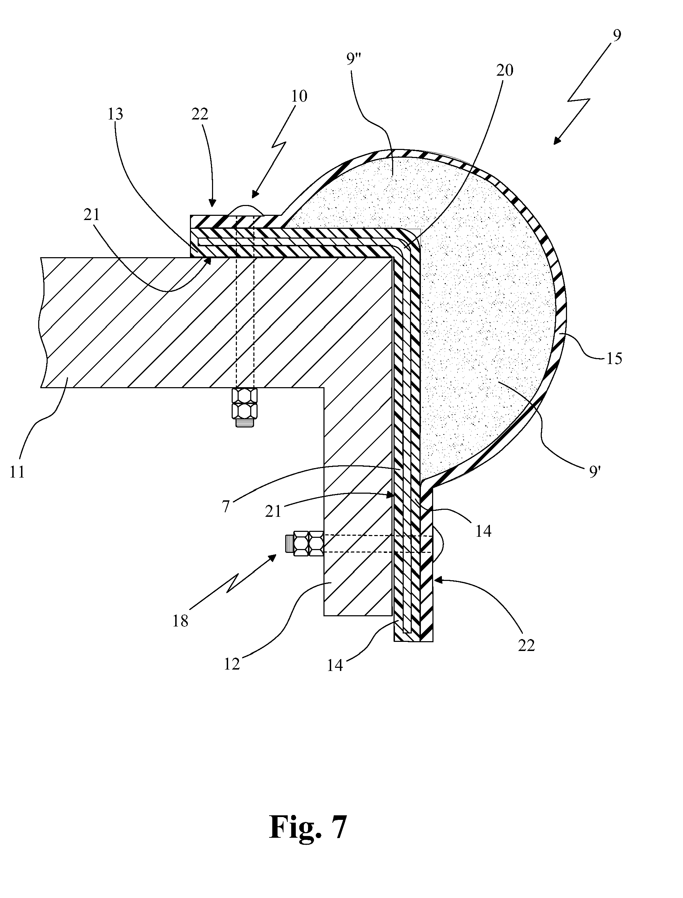

In greater detail, according to the enclosed Figures 1-5, the bumper body 9 extends from the first portion 7 to the bent portion 20 of the supporting structure 6, for the case where the fender 1 is intended for use on docks 2 that are not particularly exposed to waves (for example, protected docks). In this case, the docks 2 do not risk to be hit by the craft (especially by their peripheral projecting edges) up to the edge of the walking surface, which would damage the craft. On the contrary, according to the enclosed Figures 6, 7, the bumper body 9 is fixed with a first portion 9' to the first portion 7 of the supporting structure 6 and with a second portion 9" to the second portion 13 of the supporting structure 6.

The above mentioned two portions 9', 9" of the supporting structure 6 are in this case positioned so as to at least partially cover the first and second portions 7, 13 of the supporting structure 6 and extend continuously from the one to the other, thus completely covering the bent portion 20 of the supporting structure 6.

This last embodiment is particularly intended for use on piers subject to strong waves, where the waves can cause the craft to reach beyond the edge of the pier walking surface (especially with their peripheral projecting edges). In this case, the second portion 9" of the bumper body 9 prevents any wear of the craft hull, in particular on the edge 5 of the pier 3.

Said bumper body 9 is made of a polymeric material capable of absorbing impacts, like for example wood, high density polystyrene, sponge rubber or polyurethane foam. According to a preferred embodiment of the fender 1, the material that makes up the bumper body 9 is polyurethane foam, in particular with a density included between 60 and 100 kg/m³ and preferably of 75 kg/m³.

Advantageously, the bumper body 9 projects from the supporting structure 6 with a thickness s₃ included between 20 and 100 mm and preferably with a thickness s₃ of 50 mm.

The supporting structure 6 of the fender 1 is made of a rigid material, in particular a metallic material. Preferably said metallic material, like for example steel C40, is mechanically resistant to impacts and fatigue.

The L-shaped plate forming the supporting structure has advantageously a thickness so included between 1 and 3 mm.

Advantageously, the fender 1 comprises at least one protective layer 14, 15 (preferably with thickness included between 1 and 15 mm) made of a polymeric material resistant to tear and wear, used to cover the bumper body 9 and at least the portion of the supporting structure 6 that is not occupied by the bumper body 9.

In greater detail, according to a preferred embodiment of the present invention, in order to protect the metal plate that forms the supporting structure 6 from corrosion, the same metallic plate 6 is completely covered with a first protective layer 14 made of a polymeric material resistant to tear and wear. Preferably, the first protective layer 14 has a thickness s₁ included between 1 and 5 mm and is deposited on the supporting structure 6 once the latter has undergone a surface sand-blasting treatment and once a primer has been spread on it to favour the adhesion of the first protective layer 14 on the metal plate 6.

Advantageously, once the bumper body 9 has been fixed to the supporting structure 6 already covered with the first protective layer 14, a second protective layer 15, also made of a polymeric material resistant to tear and wear, is laid on the fender 1. Said second protective layer 15, in particular, is laid on the fender 1 at the level of the second exposed surface 22 of the supporting structure 6 and preferably has a thickness s₂ included between 1 and 10 mm. The polymeric material resistant to tear and wear that makes up the first and second protective layers 14 and 15 is preferably selected from the polyurethane family and, more precisely, is an elastomeric polyurethane.

A material that has proved to be particularly suitable for the first and second protective layers 14 and 15 of the fender in question is an elastomeric polyurethane obtained from the reaction of a polyolic component, in particular obtained with a preparation containing diethyl methylbenzenediamine, with a poly-isocyanic component, in particular obtained with a preparation containing diphenylmethane diisocyanate.

Said elastomeric polyurethane, in fact, offers, in addition to suitable resistance to tear and wear, good resistance to corrosion and exposure to UV rays, which make it an optimal solution for application in marine environments, which are often excessively aggressive for many polymeric materials.

The bumper body 9 is interposed between the first layer 14 and the second layer 15. In particular, it can be fixed to the supporting structure 6, that is, to the first protective layer 14, by glueing, or, otherwise, it can be simply arranged on the supporting structure 6, in the desired position, when the reticulation of the polymeric material forming the first protective layer 14 has not yet been completed. In this way, once the reticulation of the first protective layer 14 has been completed and the second protective layer 15 has been laid on the fender 1, the bumper body 9 is firmly anchored to the supporting structure 6.

The second protective layer 15 protects the bumper body 9 from exposure to water and the marine atmosphere.

The bumper body 9, in fact, being made of a foam material, that is, a porous material, when in direct contact with water tends to absorb it and to be shortly impregnated, which over time gives rise to deterioration phenomena that negatively affect its performance.

According to a preferred embodiment of the invention shown in the enclosed figures, the bumper body 9 has a tapered shape with inclined sides that becomes slightly thinner towards the top, starting from the supporting structure 6 to which it is fixed by means of an enlarged base.

Thanks to said configuration, when a craft hits the fender 1, a deformation of the bumper body 9 takes place, which is uniformly distributed over the volume of the latter, avoiding any tearing of the second protective layer 15 due to concentrated stress, in particular on the inclined sides of the bumper body 9 itself.

According to the embodiment of the invention illustrated in Figures 1-5, the second portion 13 of the supporting structure 6 is advantageously provided with at least two slots 16 suited to house the first fixing means 10, preferably consisting of screws or bolts, to fix the supporting structure 6 to the dock 2 or the pier 3.

Said slots 16 are obtained in the second portion 13 of the supporting structure 6 before the first protective layer 14 of polymeric material is laid on the latter, in order to avoid that, following the execution of the slots 16, some portions of the supporting structure 6 remain uncovered, as they may be subject to dangerous corrosion phenomena.

According to a different embodiment of the invention, illustrated in Figures 6 and 7, the supporting plate 6 is obtained from a metal net provided with a plurality of holes suited to allow the passage of fixing means (first and/or second fixing means described below) suited to fix the fender to the dock 2 or the pier 3.

In this case, the protective layer (that is, in particular, the first protective layer) in elastomeric polyurethane covers the net even in the spaces among its meshes.

The fixing means 10 are inserted in the slots 16, that is, in the holes of the net-shaped plate, and in special holes created for this purpose in the walking surface 11 of the dock 2 or the pier 3. In order to ensure the good conditions of the docks 2 and the piers 3, it is however preferable to limit to a minimum the number of holes that must be specifically made in the walking surface 11 of the dock 2 or the pier 3 to fix the fenders, for example by using already existing holes or slots, like the holes used to fasten the wooden boards of a walking surface 11 of a pier 3, or the space between two consecutive wooden boards, or again the holes used to fasten previously installed fenders.

Advantageously, the fixing means 10 can be introduced in the slots 16 so that they can be adjusted from the inside, or they can be selectively inserted in the different holes of the net-shaped plate in order to intercept corresponding holes or slots already existing in the walking surface 11 of the dock 2 or the pier 3.

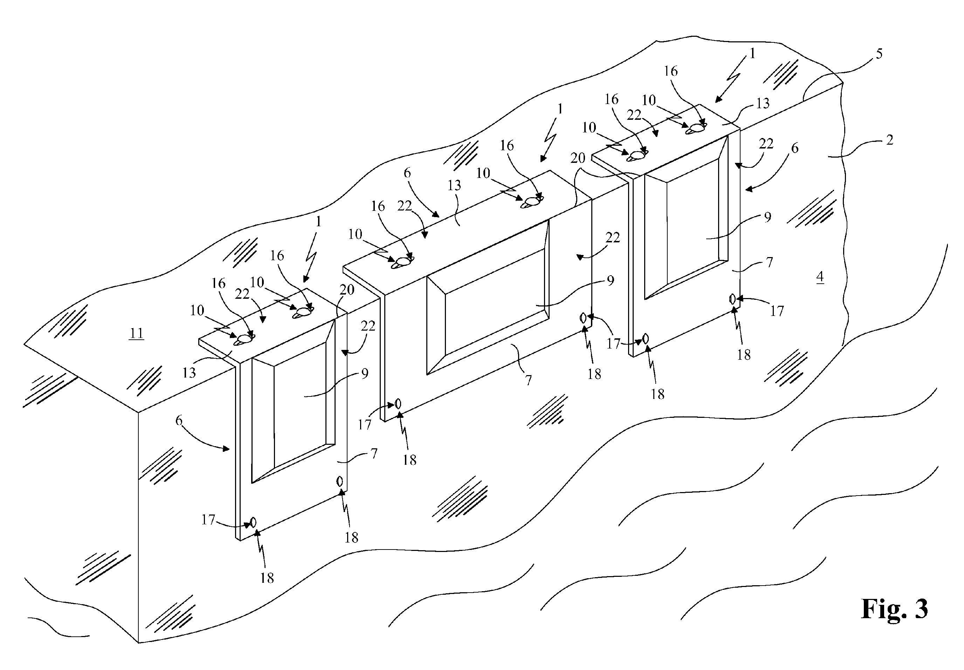

According to a possible embodiment of the invention illustrated in particular in Figure 3, the fender 1 is advantageously provided with one or more holes 17 made in the first portion 7 of the supporting structure 6, suited to house second fixing means 18 through which the fender 1 can be constrained also to the vertical wall 4 of a dock 2 or a pier 3.

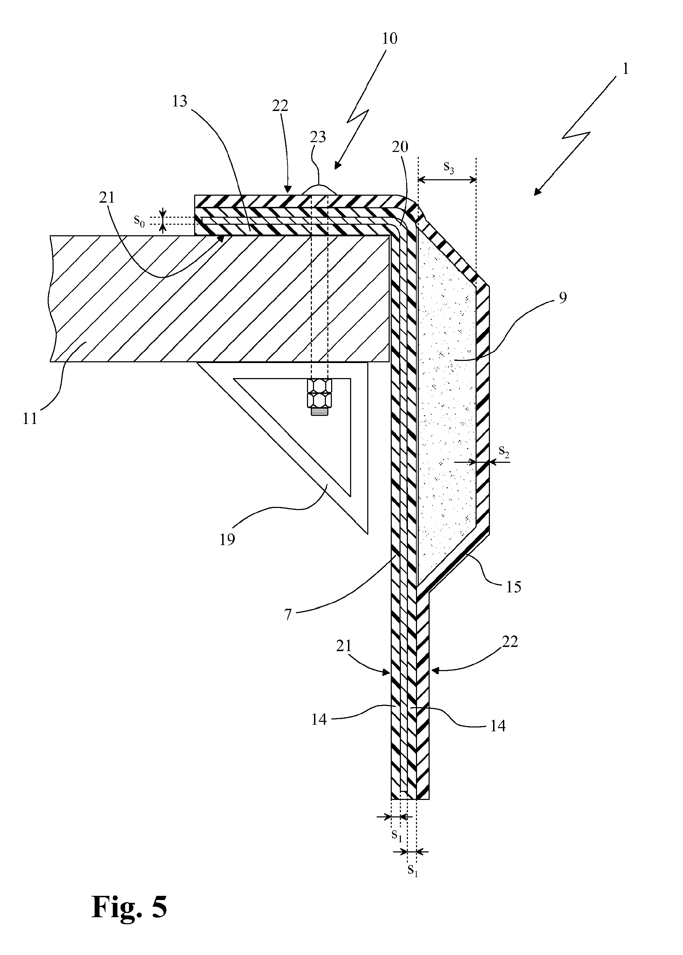

In order to fix the fender 1 to a pier or landing structure 3, of the type made with wooden boards, the first fixing means 10 advantageously comprise one or more brackets 19 suited to be arranged under the walking surface 11 of the pier 3, as shown in Figure 5, and to be connected to the fender 1 through at least one screw 23.

Obviously, the brackets can be used also in the case of fenders equipped with a net-shaped plate 6. Analogously, the second fixing means can be used also to fix the first portion 7 of the net-shaped plate 6 to the vertical wall 4 of a dock 2 or a pier 3.

In the case where a craft hits the fender 1, the brackets 19 oppose the raising movement of the second portion 13, forcing it to rest on the walking surface 11 and maintaining the first portion 7 of the supporting structure 6 arranged substantially orthogonal to the walking surface 11.

The first portion 7 of the supporting structure 6 is advantageously elongated in shape and, in greater detail, according to an embodiment of the fender 1 that is the subject of the present invention illustrated in particular in Figure 1, the first portion 7 is elongated horizontally, while according to the embodiment of the fender 1 illustrated in particular in Figure 2 it is elongated vertically.

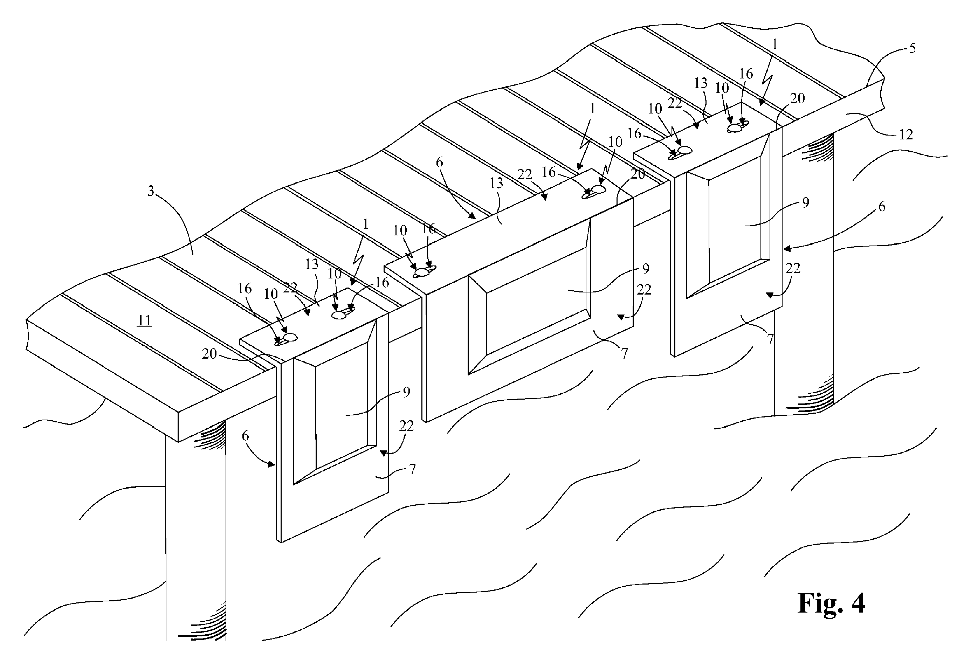

Advantageously, the fenders 1 made according to the two embodiments of Figures 1 and 2 are arranged alternately on the vertical wall 4 of the dock 2, or on the vertical wall 12 of the pier 3, as shown in Figures 3 and 4. This arrangement guarantees suitable protection also for smaller craft, in which the most projecting portion of the hull is lower than the water surface, and at the same time makes it possible to reduce the number of fenders that are necessary to properly cover the vertical wall 4 of the dock 2, or the vertical wall 12 of the pier 3. Furthermore, as the docks 2 and the piers 3 do not have standardized sizes and can have different lengths, the fenders in the two shapes described above can be installed allowing an optimal covering to be obtained in any case.

The first portion 7 of the fender 1, according to the first embodiment of the invention illustrated in Figure 1, has preferably a width L₁ included between 80 and 120 cm and a height h₁ included between 40 and 70 cm, while the impact portion 7 of the fender 1 in accordance with the second embodiment illustrated in Figure 2 has preferably a width L₂ included between 40 and 70 cm and a height h₂ included between 80 and 120 cm.

Considering the reduced size of the fender 1, the installation or replacement of the same is particularly easy and can be comfortably carried out by only one operator.

Consequently, the costs necessary for the installation and maintenance of the fender 1 of the present invention are advantageously low.

The subject of the present invention also includes a process 10 for making pier or dock fenders having in particular the structural and functional characteristics of the fender described above, whose reference numbers remain the same for the sake of simplicity.

The process includes first of all the preparation of an L-shaped plate 6, more specifically a steel plate, intended to be installed so as to cover the edge 5 of the dock 2 or the pier 3, and provided for this purpose with a bent portion 20.

The latter, as explained above, delimits a first portion 7 destined to be arranged so as to cover the vertical wall 4, 12 of the dock 2 or the pier 3, and a second portion 13 destined to be arranged so as to cover the walking surface 11 of the dock 2 or the pier 3.

The shaped plate 6 will be preferably obtained by bending a plane sheet and will preferably undergo a sand-blasting stage and then be covered with a primer.

At this point the L-shaped plate, preferably previously sand-blasted and covered with a primer, is advantageously covered with a preliminary layer of elastomeric polyurethane in the fluid state through a preliminary spraying stage.

The preliminary spraying stage is carried out on both sides of the plate 6, preferably with a preliminary protective layer 14 with thickness s₁ included between 1 and 5 mm.

At this point the elastically yielding bumper body 9 is pre-arranged over at least one part of the first portion 7 of the shaped plate 6 covered with the above mentioned first protective layer 14. In greater detail, the bumper body 9 is advantageously placed on the shaped plate 6 before the complete reticulation of the preliminary layer of elastomeric polyurethane, that is, when the preliminary layer of elastomeric polyurethane is still at least partially in the fluid state and the bumper body 9 can adhere to it at the level of the selected portion of the shaped plate 6.

A layer of elastomeric polyurethane in the fluid state (preferably obtained with the two reaction components mentioned above) is then sprayed on the bumper body 9 and over the preliminary layer of elastomeric polyurethane of the shaped plate 6 that is free from the bumper body 9.

Then, the reticulation of the elastomeric polyurethane layer takes place and a continuous external covering is obtained on the shaped plate and the bumper body 9.

Once the reticulation stage has been completed, the layer of elastomeric polyurethane keeps the bumper body 9 rigidly connected to the shaped plate 6 and can deform elastically in case of impact with the hull of a craft, transmitting the elastic reaction of the bumper body 9. According to a different embodiment of the process that is the subj ect of the present invention, there is no preliminary spraying of the preliminary layer of elastomeric polyurethane but only a single spraying stage in which a layer of elastomeric polyurethane is sprayed so as to cover the bumper body 9 and the portion of the shaped plate 6 that is free from the bumper body 9. According to the shape and functionality of the bumper body 9, the bumper body can be prepared by simply arranging it only on the first portion 7 of the shaped plate 6 or also on the second portion 13. In the latter case, in this preparation stage the bumper body 9 will be arranged with a first portion (9') on the first portion 7 of the shaped plate 6 and with a second portion (9") on the second portion 13 of the shaped plate 6. In this way, the two portions of the bumper body 9 will develop continuously so as to cover the bent portion 20 and to cover at least partially the first and second portions 7, 13 of the shaped plate 6.

## Claims

1. Fender for docks or piers of the type provided with a walking surface (11) arranged just above the water surface and a vertical wall (4, 12) in contact with the water and forming an edge (5) with the walking surface (11), said fender (1) comprising:
- a supporting structure (6) intended to be fixed to a dock (2) or a pier (3) through first fixing means (10);
- an elastically yielding bumper body (9) fixed to and projecting from said supporting structure (6) and suited to be impacted by the hull of a craft that hits the fender (1),
**characterized in that** said supporting structure (6) is constituted by at least one L-shaped plate intended to be installed so as to cover the edge (5) of said dock (2) or said pier (3) and provided with a bent portion (20) delimiting a first portion (7) intended to be arranged so as to cover the vertical wall (4, 12) of said dock (2) or said pier (3), and a second portion (13) intended to be arranged so as to cover the walking surface (11) of said dock (2) or said pier (3), said bumper body (9) being fixed over at least said first portion (7) of said supporting structure (6) so as to cover it at least partially, substantially extends at least until reaching said bent portion (20).

2. Fender for docks or piers according to claim 1, **characterized in that** said bumper body (9) extends until reaching said bent portion (20) of said supporting structure (6).

3. Fender for docks or piers according to claim 1, **characterized in that** said bumper body (9) is fixed with a first part (9) over the first portion (7) of said supporting structure (6) and with a second part (9") over the second portion (13) of said supporting structure (6), said first and second part developing continuously from the one to the other so as to cover said bent portion (20) and at least partially said first and second portion (7, 13) of said supporting structure (6).

4. Fender for docks or piers according to any of the preceding claims, **characterized in that** said supporting plate is obtained from a metal net provided with a plurality of holes suited to allow the passage of first means for fixing said fender to said dock (2) or said pier (3).

5. Fender for docks or piers according to any of the preceding claims, **characterized in that** it comprises at least one protective layer (14, 15) made of a polymeric material resistant to tear and wear covering said bumper body (9) and at least the portion of said supporting structure (6) that is free from said bumper body (9).

6. Fender for docks or piers according to claim 5, **characterized in that** said protective layer (14, 15) comprises at least one first layer (14) covering said supporting structure (6) with said bumper body (9) fixed over said first protective layer (14), in particular with a thickness (s₁) included between 1 and 5 mm, and at least one second layer (15), in particular with a thickness (s₂) included between 1 and 10 mm, covering said bumper body (9) and said first protective layer (14) in the portion free from said bumper body (9), the latter being interposed between said first protective layer (14) and said second protective layer (15).

7. Fender for docks or piers according to claim 5, **characterized in that** said polymeric material resistant to tear and wear is an elastomeric polyurethane, in particular obtained from the reaction of a polyolic component, in particular obtained with a preparation containing diethyl methylbenzenediamine, with a poly-isocyanic component, in particular obtained with a preparation containing diphenylmethane diisocyanate.

8. Fender for docks or piers according to claim 1, **characterized in that** said bumper body (9) is made of a polymeric material capable of absorbing impacts, and in particular is a polyurethane foam with density included between 60 and 100 kg/m³.

9. Fender for docks or piers according to any of the preceding claims, **characterized in that** said first fixing means (10) comprise at least one bracket (19) suited to be arranged under the walking surface (11) of a pier (3) to which said fender (1) is fixed, and at least one screw (23) positioned so as to connect said bracket (19) to said fender (1).

10. Process for making a fender for docks or piers of the type provided with a walking surface (11) arranged above the water surface and a vertical wall (4, 12) in contact with the water and forming an edge (5) with the walking surface (11), **characterized in that** it comprises the following operational stages:
pre-arranging an L-shaped plate (6), in particular made of metal, intended to be installed so as to cover the edge (5) of said dock (2) or said pier (3) and provided with a bent portion (20) delimiting a first portion (7) intended to be arranged so as to cover the vertical wall (4, 12) of said dock (2) or said pier (3), and a second portion (13) intended to be arranged so as to cover the walking surface (11) of said dock (2) or said pier (3);
pre-arranging an elastically yielding bumper body (9) over at least one part of the first portion (7) of said shaped plate (6);
spraying a layer of elastomeric polyurethane in the fluid state on said bumper body (9) and said shaped plate (6) at least on the portions of the latter that are free from said bumper body (9),
reticulation of said layer of elastomeric polyurethane in order to create a continuous external coating on said shaped plate (6) and said bumper body (9).

11. Process for making a fender according to claim 10, **characterized in that** it comprises a preliminary spraying stage for spraying a preliminary layer of elastomeric polyurethane in the fluid state on said L-shaped plate (6) before said stage in which said bumper body (9) is pre-arranged over said at least one part of the first portion (7) of said shaped plate (6).

12. Process for making a fender according to claim 11, **characterized in that** said stage in which said bumper body (9) is pre-arranged over said at least one part of the first portion (7) of said shaped plate (6) is carried out before the complete reticulation of said preliminary layer of elastomeric polyurethane, with said preliminary layer of elastomeric polyurethane still in the at least partially fluid state in order to allow said bumper body (9) to adhere to it at the level of at least one part of the first portion (7) of said shaped plate (6).

13. Process for making a fender according to claim 11, **characterized in that** in said spraying stage a layer of elastomeric polyurethane is sprayed over said bumper body (9) and over the preliminary layer of elastomeric polyurethane that is free from said bumper body (9).

14. Process for making a fender according to any of the claims from 10-13, **characterized in that** in said pre-arranging stage said bumper body (9) is pre-arranged with a first part (9') over the first portion (7) of said shaped plate (6) and with a second part (9") over the second portion (13) of said shaped plate (6), said first and second part (9', 9") developing continuously to cover said bent portion (20) and at least partially said first and second portion (7, 13) of said shaped plate (6).

15. Process for making a fender according to any of the claims from 10-14, **characterized in that** once said reticulation stage has been completed said layer of elastomeric polyurethane maintains said bumper body (9) rigidly connected to said shaped plate (6) and is suited to deform elastically in case of impact with the hull of a craft, transmitting the elastic reaction of said bumper body (9).
